(19) Europäisches Patentamt
European Patent Office
Office européen des brevets

(11) EP 4 195 315 B1

(12) **EUROPEAN PATENT SPECIFICATION**

(45) Date of publication and mention of the grant of the patent:
**08.04.2026 Bulletin 2026/15**

(21) Application number: **22816327.5**

(22) Date of filing: **06.05.2022**

(51) International Patent Classification (IPC):
***H01M 4/131*** *(2010.01)* ***H01M 4/62*** *(2006.01)*
***H01M 4/1391*** *(2010.01)* ***H01M 4/04*** *(2006.01)*
***H01M 10/052*** *(2010.01)* ***H01M 10/0525*** *(2010.01)*
***H01M 4/02*** *(2006.01)*

(52) Cooperative Patent Classification (CPC):
**H01M 4/02; H01M 4/04; H01M 4/0404; H01M 4/0435; H01M 4/131; H01M 4/139; H01M 4/1391; H01M 4/36; H01M 4/364; H01M 4/505; H01M 4/525; H01M 4/62; H01M 10/052; H01M 10/0525;** H01M 2004/021;
(Cont.)

(86) International application number:
**PCT/KR2022/006464**

(87) International publication number:
**WO 2022/255668 (08.12.2022 Gazette 2022/49)**

(54) **CATHODE WITH IMPROVED STRUCTURAL STABILITY FOR LITHIUM SECONDARY BATTERY, METHOD FOR MANUFACTURING SAME, AND LITHIUM SECONDARY BATTERY COMPRISING SAME**

KATHODE MIT VERBESSERTER STRUKTURSTABILITÄT FÜR LITHIUMSEKUNDÄRBATTERIE, VERFAHREN ZUR HERSTELLUNG DAVON UND LITHIUMSEKUNDÄRBATTERIE DAMIT

CATHODE À STABILITÉ STRUCTURELLE AMÉLIORÉE POUR BATTERIE SECONDAIRE AU LITHIUM, SON PROCÉDÉ DE FABRICATION, ET BATTERIE SECONDAIRE AU LITHIUM LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.06.2021 KR 20210071223**

(43) Date of publication of application:
**14.06.2023 Bulletin 2023/24**

(73) Proprietor: **LG Energy Solution, Ltd.**
**Seoul 07335 (KR)**

(72) Inventors:
- **KIM, Gwang Yeon**
  **Daejeon 34122 (KR)**
- **OH, Sang Seung**
  **Daejeon 34122 (KR)**
- **KIM, Hye Hyeon**
  **Daejeon 34122 (KR)**
- **JO, Chi Ho**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
**EP-A1- 3 579 308** **EP-A1- 4 199 156**
**WO-A1-2011/052126** **CN-A- 107 706 351**
**JP-A- 2013 016 515** **JP-A- 2013 016 515**
**JP-A- 2020 509 559** **JP-B2- 6 428 647**
**KR-A- 20160 088 809** **US-A1- 2016 351 905**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **ESPINAL LAURA: "Characterization of Materials, Second Edition", 12 October 2012 (2012-10-12), pages 1 - 9, XP055832126, Retrieved from the Internet <URL:https://doi.org/10.1002/0471266965.com129>**

(52) Cooperative Patent Classification (CPC): (Cont.)
H01M 2004/028; Y02E 60/10

## Description

[Technical Field]

The present disclosure relates to a positive electrode for a lithium secondary battery with improved structural stability, a manufacturing method thereof, and a lithium secondary battery including the same.

[Background Art]

Recently, the demand for secondary batteries as energy sources is rapidly increasing. Among these secondary batteries, a lithium secondary battery having a high energy density and a high voltage, a long cycle life, and a low self-discharge rate has been commercialized and widely used.

Graphite is mainly used as a negative electrode material of the lithium secondary battery. However, since the graphite has a small capacity per unit mass of 372 mAh/g, it is difficult to achieve a high capacity of the lithium secondary battery. Accordingly, in order to achieve the high capacity of the lithium secondary battery, as a non-carbon-based negative electrode material having a higher energy density than the graphite, a negative electrode material forming an intermetallic compound with lithium, such as silicon, tin, and an oxide thereof, has been developed and used. However, such a non-carbon-based negative electrode material has a problem in that, although a capacity is large, initial efficiency is low and thus lithium consumption is great during an initial charging and discharging and loss of an irreversible capacity is large.

**In** this regard, a method capable of providing a lithium ion source or reservoir for a positive electrode material and overcoming irreversible capacity loss of a negative electrode using a material that is electrochemically active after a first cycle so as not to degrade the overall performance of the battery has been proposed. Specifically, a method of applying an oxide containing an excess of lithium, for example, $Li_6CoO_4$, to the positive electrode as a sacrificial positive electrode material or an irreversible additive (or an overdischarge inhibitor) is known.

Meanwhile, an existing irreversible additive such as $Li_6CoO_4$ is generally prepared by reacting cobalt oxide or the like with an excess of lithium oxide. The irreversible additive prepared as described above is structurally unstable and generates a large amount of oxygen gas ($O_2$) as charging is performed as follows. When the secondary battery is initially charged, that is, when all of the irreversible additive has not reacted and remains upon activation of the battery, a reaction may occur in the subsequent charging/discharging process to cause a side reaction or a large amount of oxygen gas inside the battery. The generated oxygen gas may cause volume expansion of an electrode assembly and act as one of main factors causing degradation of battery performance.

$$Li_6CoO_4 \rightarrow Li_4CoO_4 \xrightarrow{O_2\ generation} Li_1CoO_{2.5} \xrightarrow{O_2\ generation} CoO_2$$

In addition, the conventionally used irreversible additive exhibits a very low powder electrical conductivity of $\sim 10^{-11}$ S/cm, which is close to an insulator, due to a two-dimensional (2D) percolating network. The low powder electrical conductivity increases electrical resistance of the positive electrode. In this case, a large capacity of 200 mAh/g or more is exhibited at a low C-rate, and when the C-rate is increased, since performance is rapidly decreased as charging and discharging proceed due to large resistance, there is a limitation in that a charging/discharging capacity of the battery is decreased, and high-speed charging and high-speed discharging are difficult.

Accordingly, there is a demand for the development of a lithium secondary battery with excellent electrical performance and improved battery safety.

JP 2013016515A describes an electrode for a battery that comprises a collector, and an active material layer formed on the surface of the collector and containing an active material, a binder, and a conductive assistant. The density of the conductive assistant in the active material layer decreases gradually with increasing distance from the collector side toward the electrolyte layer side of the active material layer, the porosity of the active material layer increases gradually with increasing distance from the collector side toward the electrolyte layer side of the active material layer, and the concentration of the binder in the active material layer does not increase with increasing distance from the electrolyte layer side toward the collector side of the active material layer.

US 20160351905A1 describes a nonaqueous electrolyte secondary battery that includes a positive electrode containing a positive electrode active material, a negative electrode, and a nonaqueous electrolyte. The positive electrode contains the active material composed of a lithium transition metal oxide and a positive electrode additive composed of an oxide that contains Li and at least two elements other than Li and oxygen and has an antifluorite structure. The nonaqueous electrolyte secondary battery obtained is charged until the potential of the positive electrode is 4.0 V or higher and 4.65 V or lower (vs. Li/Li+).

EP 3579308A1 describes an electrode for a rechargeable battery in which a current collector is coated with an

electrode mixture including an electrode active material and a binder includes a first electrode composite layer including PVdF as a first binder and an electrode active material and applied on a current collector; and a second electrode composite layer including a second binder and an electrode active material and applied on the first electrode composite layer, wherein crystallinity of the first binder is 58 or greater.

CN 107706351A describes a positive electrode that comprises a current collector, an active layer formed on the current collector and a conducting layer, wherein the conducting layer is formed on the active layer and the surface of the conducting layer is coated with an inert material which 0.1-30 nm in thickness, wherein the active layer contains a positive active material and a lithium supplement component.

EP 4199156A1 describes a master batch for a positive electrode additive and a positive electrode slurry for a lithium secondary battery that contains the same, wherein the master batch contains a high content of irreversible additive together with a positive electrode active material so that a small amount of irreversible additive is dispersed in the positive electrode slurry.

[Related Art Document]

[Patent Document]

Japanese Patent Laid-open Application No. 2019- 061751

[Disclosure]

[Technical Problem]

An object of the present technology is to provide a positive electrode for a lithium secondary battery with improved electrical performance and improved structural stability, a manufacturing method thereof, and a lithium secondary battery including the same.

[Technical Solution]

The present technology is directed to providing a positive electrode for a lithium secondary battery including a current collector, and a mixture layer formed on one surface or both surfaces of the current collector, wherein the mixture layer is a double-layer structure in which a first mixture layer and a second mixture layer are stacked, wherein the second mixture layer is formed on the first mixture layer formed on the current collector, the first mixture layer includes a positive electrode active material represented by Chemical Formula 2 below, a positive electrode additive represented by Chemical Formula 1 below, a conductive material, and a binder, the second mixture layer includes a positive electrode active material represented by Chemical Formula 2 below, the porosity of the first mixture layer ranges from 15 to 40%, and the porosity of the second mixture layer ranges from 40 to 70%, wherein porosity is determined using a mercury porosimeter.

[Chemical Formula 1] $Li_pCo_{(1-q)}M^1_qO_4$

In Chemical Formula 1, $M^1$ denotes at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are $5 \le p \le 7$ and $0 \le q \le 0.5$, respectively.

[Chemical Formula 2] $Li_x[Ni_yCo_zMn_wM^2_v]O_u$

In Chemical Formula 2, $M^2$ denotes at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are $1.0 \le x \le 1.30$, $0.1 \le y < 0.95$, $0.01 < z \le 0.5$, $0.01 < w \le 0.5$, $0 \le v \le 0.2$, and $1.5 \le u \le 4.5$, respectively.

An average thickness of the first mixture layer may range from 0.1 μm to 20 μm, and an average thickness of the second mixture layer may range from 50 μm to 300 μm.

A ratio (D1:D2) of an average thickness (D1) of the first mixture layer to an average thickness (D2) of the second mixture layer may range from 4:6 to 1:10.

A content of the positive electrode additive may range from 0.1 to 5 wt% based on a total weight of the first mixture layer.

The present technology is also directed to providing a method of manufacturing a positive electrode for a lithium secondary battery according to the present technology including a first mixture layer forming operation of forming a first mixture layer by applying a first slurry including a positive electrode active material represented by Chemical Formula 2

below and the positive electrode additive represented by Chemical Formula 1 on one side or both sides of a current collector, a first rolling operation of rolling the formed first mixture layer, a second mixture layer forming operation of forming a second mixture layer by applying second slurry including a positive electrode active material represented by Chemical Formula 2 below on the rolled first mixture layer, and a second rolling operation of rolling the formed second mixture layer, wherein the first rolling operation is performed at a speed ranging from 0.5 m/s to 6 m/s and a temperature ranging from 10°C to 40°C, the second rolling operation is performed at a speed ranging from 2 m/s to 7 m/s and a temperature ranging from 40°C to 100°C, and the second rolling operation is performed at a faster speed than the first rolling operation, wherein the porosity of the first mixture layer ranges from 15% to 40%, and the porosity of the second mixture layer ranges from 40% to 70%, wherein porosity is determined using a mercury porosimeter.

[Chemical Formula 1] $Li_pCo_{(1-q)}M^1{}_qO_4$

In Chemical Formula 1, $M^1$ denotes at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are $5 \le p \le 7$ and $0 \le q \le 0.5$, respectively.

[Chemical Formula 2] $Li_x[Ni_yCo_zMn_wM^2{}_v]O_u$,

in Chemical Formula 2, $M^2$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are $1.0 \le x \le 1.30$, $0.1 \le y < 0.95$, $0.01 < z \le 0.5$, $0.01 < w \le 0.5$, $0 \le v \le 0.2$, and $1.5 \le u \le 4.5$, respectively.

The first mixture layer may satisfy a thickness change rate condition of Equation 1 below.

[Equation 1]

$$D^2_{min}/D^1_{max} \times 100 \ge 70\%$$

In Equation 1, $D^1_{max}$ may denote a maximum thickness of the first mixture layer after the first rolling operation, and $D^2_{min}$ may denote a minimum thickness of the first mixture layer after the second rolling operation.

The present technology is also directed to providing a lithium secondary battery including the above-described positive electrode according to the present technology, a negative electrode, and a separator interposed between the positive electrode and the negative electrode.

The negative electrode may include a negative electrode current collector, and a negative electrode mixture layer which is located on the negative electrode current collector and contains a negative electrode active material, and the negative electrode active material may include a carbon material and a silicon material.

[Advantageous Effects]

A positive electrode for a lithium secondary battery according to the present technology, a manufacturing method thereof, and a lithium secondary battery including the same have an advantage in that, when the positive electrode containing a positive electrode additive is manufactured, the conditions of first and second rolling operations are controlled, and thus structures and electrical properties of a first mixture layer and a second mixture layer can be improved.

[Best Mode]

The present invention may be modified into various forms and may have a variety of embodiments, and therefore, specific embodiments will be described in detail.

In the present invention, the terms "comprising," "having," and the like are used to specify that the presence of a feature, a number, a step, an operation, a component, an element, or a combination thereof described herein, and they do not preclude the presence or addition of one or more other features, numbers, steps, operations, components, elements, or combinations thereof.

In addition, in the present invention, when a portion of a layer, a film, a region, a plate, or the like is described as being "on" another portion, this includes not only a case in which the portion is "directly on" another portion but also a case in which still another portion is present between the portion and another portion. Conversely, when a portion of a layer, a film, a region, a plate, or the like is described as being "under" another portion, this includes not only a case in which the portion is "directly under" another portion but also a case in which still another portion is present between the portion and another portion. In addition, in this application, as being disposed "on" may include the case of being disposed not only on an upper portion but also on a lower portion.

Hereinafter, the present invention will be described in more detail.

## Positive electrode for lithium secondary battery

In one embodiment of the present technology, there is provided a positive electrode for a lithium secondary battery, which includes a current collector, and a mixture layer formed on one surface or both surfaces of the current collector, wherein the mixture layer is a double-layer structure in which a first mixture layer and a second mixture layer are stacked, wherein the second mixture layer is formed on the first mixture layer formed on the current collector, the first mixture layer includes a positive electrode active material represented by Chemical Formula 2 below, a positive electrode additive represented by Chemical Formula 1 below, a conductive material, and a binder, the second mixture layer includes a positive electrode active material represented by Chemical Formula 2 below, the porosity of the first mixture layer ranges from 15% to 40%, and the porosity of the second mixture layer ranges from 40% to 70%, wherein porosity is determined using a mercury porosimeter.

[Chemical Formula 1] $Li_pCo_{(1-q)}M^1{}_qO_4$

In Chemical Formula 1, $M^1$ denotes at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are $5 \leq p \leq 7$ and $0 \leq q \leq 0.5$, respectively.

[Chemical Formula 2] $Li_x[Ni_yCo_zMn_wM^2{}_v]O_u$,

in Chemical Formula 2, $M^2$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are $1.0 \leq x \leq 1.30$, $0.1 \leq y < 0.95$, $0.01 < z \leq 0.5$, $0.01 < w \leq 0.5$, $0 \leq v \leq 0.2$, and $1.5 \leq u \leq 4.5$, respectively.

Specifically, in Chemical Formula 1, $M^1$ may denote a Zn element, and q may be $0.2 \leq q \leq 0.4$.

The positive electrode for a lithium secondary battery according to the present technology has a double-layer structure in which the first mixture layer and the second mixture layer are sequentially stacked on the current collector and has a structure in which the second mixture layer is located at the outermost portion. In particular, the positive electrode for a lithium secondary battery according to the present technology may improve structures and electrical properties of the first and second mixture layers by controlling the conditions of first and second rolling processes when the positive electrode is manufactured.

The positive electrode additive may contain lithium (Li) in excess and may provide Li for lithium consumption generated by an irreversible chemical and physical reaction at the negative electrode during initial charging, and thus a charging capacity of the battery is increased and the irreversible capacity is reduced so that lifetime characteristics can be improved.

According to the present technology, a lithium cobalt oxide represented by Chemical Formula 1 is employed as the positive electrode additive. In this case, as the lithium cobalt oxide represented by Chemical Formula 1, $Li_6CoO_4$, $Li_6Co_{0.5}Zn_{0.5}O_4$, and $Li_6Co_{0.7}Zn_{0.3}O_4$ alone or a combination thereof may be used. When compared to nickel-containing oxides commonly used in the art, the lithium cobalt oxide represented by Chemical Formula 1 has an advantage in that, since a content of lithium ions is high and a voltage range required for delithiation is low, lithium ions may be desorbed without affecting a reaction of the positive electrode active material when the battery is activated.

In addition, the lithium cobalt metal oxide represented by Chemical Formula 1 may have a tetragonal crystal structure and have a space group of $P4_2/nmc$ among the tetragonal crystal structures. The lithium cobalt metal oxide represented by Chemical Formula 1 exhibits excellent charging/discharging characteristics and lifetime characteristics in the lithium secondary battery but has a problem in that thermal stability is low. Specifically, when the lithium cobalt metal oxide represented by Chemical Formula 1 is used as a positive electrode additive, structural deformation occurs due to an influence of temperature during preparation of the mixture layer of the positive electrode, for example, a temperature of slurry, so that battery characteristics may be degraded.

Thus, the positive electrode for a lithium secondary battery according to the present technology prevents structural deformation of the positive electrode additive from occurring and improves the structures and the electrical properties of the first and second mixture layers by controlling the conditions of the first and second rolling processes when the positive electrode containing the positive electrode additive is manufactured.

As an example, the positive electrode for a lithium secondary battery according to the present technology may satisfy Equation 1 below during X-ray diffraction (XRD) analysis of the first mixture layer.

[Equation 1]

$$A/B \leq 1$$

A denotes an intensity of the strongest peak among peaks shown in the range of $2\theta=38.5\pm0.1°$, and B denotes an intensity of the strongest peak among peaks shown in the range of $2\theta=47.9\pm0.1°$.

In Equation 1, the peak B shown in the range of $2\theta=47.9\pm0.1$ ° is implemented by a crystal of the lithium cobalt metal oxide represented by Chemical Formula 1, and the peak A shown in the range of $2\theta=38.5\pm0.1°$ is implemented by an impurity. It means that a fraction of the lithium cobalt metal oxide represented by Chemical Formula 1 increases as an intensity ratio of the peaks, that is, "A/B," decreases. In the positive electrode according to the present technology, the fraction of the lithium cobalt metal oxide represented by Chemical Formula 1 of the positive electrode additive included in the first mixture layer is improved to 98% or more so that A/B may satisfy 1 or less, 0.35 or less, 0.25 or less, or 0.1 or less. In some cases, since the lithium cobalt metal oxide represented by Formula 1 accounts for a 100% fraction of the positive electrode additive, A/B may satisfy zero.

In addition, the porosity of the first mixture layer ranges from 15% to 40%, and specifically, may range from 20% to 40%, from 20% to 35%, from 25% to 40%, from 25% to 35%, or from 25% to 30%.

When the porosity of the first mixture layer is too small, it may be difficult for the electrolyte to penetrate to a surface of the current collector, whereas, when the porosity is too large, a density of the electrode is lowered and thus an amount of an active material in contact with the current collector may be reduced so that degradation of capacity and output may occur. Accordingly, the porosity of the first mixture layer may be in the above-described range.

In the present invention porosity is measured by a mercury (Hg) porosimeter.

In addition, a content of the positive electrode additive may range from 0.1 to 5 parts by weight based on 100 parts by weight of the first mixture layer, and specifically, from 0.1 to 3 parts by weight or from 1 to 3 parts by weight.

The first mixture layer is a positive electrode active material capable of reversible intercalation and deintercalation and is include a lithium nickel composite oxide represented by Chemical Formula 2 below.

[Chemical Formula 2] $Li_x[Ni_yCo_zMn_wM^2_v]O_u$

In Chemical Formula 2, $M^2$ denotes at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are $1.0\leq x\leq 1.30$, $0.1\leq y<0.95$, $0.01<z\leq 0.5$, $0.01<w\leq 0.5$, $0\leq v\leq 0.2$, and $1.5\leq u\leq 4.5$, respectively.

The lithium nickel composite oxide represented by Chemical Formula 2 is a composite metal oxide including Li, nickel, cobalt, and manganese, and in some cases, may have a form in which another transition metal ($M^2$) is doped. For example, the positive electrode active material may include one or more compounds selected from the group consisting of $LiNi_{1/3}Co_{1/3}Mn_{1/3}O_2$, $LiNi_{0.6}Co_{0.2}Mn_{0.2}O_2$, $LiNi_{0.8}Co_{0.1}Mn_{0.1}O_2$, $LiNi_{0.9}Co_{0.05}Mn_{0.05}O_2$, $LiNi_{0.8}Co_{0.1}Mn_{0.05}Al_{0.05}O_2$, and $LiNi_{0.7}Co_{0.1}Mn_{0.1}Al_{0.1}O_2$. As an example, in the positive electrode active material, $LiNi_{0.6}Co_{0.2}Mn_{0.2}O_2$, and $LiNi_{0.8}Co_{0.1}Mn_{0.1}O_2$ may be used alone or in combination as the lithium nickel composite metal oxide represented by Chemical Formula 2.

In addition, a content of the positive electrode active material may range from 85 to 95 parts by weight based on 100 parts by weight of the first mixture layer, and specifically, from 88 to 95 parts by weight, from 90 to 95 parts by weight, from 86 to 90 parts by weight, or from 92 to 95 parts by weight.

In this case, the conductive material may be used to improve the performance of the positive electrode, such as conductivity, and one or more selected from the group consisting of natural graphite, artificial graphite, carbon black, acetylene black, Ketjen black, and carbon fiber may be used as the conductive material. For example, the conductive material may include acetylene black.

In addition, the conductive material may be included in an amount of 1 to 10 parts by weight based on 100 parts by weight of the first mixture layer, and specifically, in an amount of 2 to 8 parts by weight or 2 to 6 parts by weight.

In addition, the binder may include one or more resins selected from the group consisting of a polyvinylidene fluoride-hexafluoropropylene copolymer (PVDF-co-HFP), polyvinylidene fluoride, polyacrylonitrile, polymethylmethacrylate, and a copolymer thereof. As an example, the binder may include polyvinylidene fluoride.

In addition, the binder may be included in an amount of 1 to 10 parts by weight based on 100 parts by weight of the first mixture layer, and specifically, may be included in an amount of 2 to 8 parts by weight or 2 to 6 parts by weight.

In addition, an average thickness of the first mixture layer is not particularly limited, but specifically, may range from 0.1 μm to 20 μm, and more specifically, from 0.1 μm to 15 μm, from 0.1 μm to 10 μm, from 2 μm to 10 μm, from 4 μm to 10 μm, or from 5 μm to 9 μm.

In addition, the second mixture layer is formed on the first mixture layer formed on the current collector, includes a positive electrode active material, and may further include the conductive material and the binder together with the positive

electrode active material, as necessary.

In addition, the porosity of the second mixture layer ranges from 40% to 70%, and specifically, may range from 40% to 65%, from 40% to 60%, from 45% to 60%, from 45% to 55%, or from 45% to 50%. In particular, the second mixture layer located on the outermost side of the positive electrode may increase the electrolyte impregnation property into the electrode by increasing the porosity. Thus, an energy density is increased so that the capacity, output characteristics, and a charging/discharging speed of the secondary battery including the positive electrode can be improved.

On the other hand, the first mixture layer and the second mixture layer, which are described above, may be separately applied and rolled, thereby having a porosity difference and forming an interface without being mixed with each other.

The positive electrode active material included in the second mixture layer may be applied without particular limitation as long as it is a lithium metal composite oxide represented by Chemical Formula 2, and the positive electrode active material may include one or more compounds selected from the group consisting of $LiNi_{1/3}Co_{1/3}Mn_{1/3}O_2$, $LiNi_{0.6}Co_{0.2}Mn_{0.2}O_2$, $LiNi_{0.8}Co_{0.1}Mn_{0.1}O_2$, $LiNi_{0.9}Co_{0.05}Mn_{0.05}O_2$, $LiNi_{0.8}Co_{0.1}Mn_{0.05}Al_{0.05}O_2$, and $LiNi_{0.7}Co_{0.1}Mn_{0.1}Al_{0.1}O_2$.

As an example, the positive electrode active material may be a lithium nickel composite metal oxide represented by Chemical Formula 2 and $LiNi_{0.6}Co_{0.2}Mn_{0.2}O_2$, and $LiNi_{0.8}Co_{0.1}Mn_{0.1}O_2$ alone or a combination thereof may be used as the positive electrode active material.

In addition, a content of the positive electrode active material may be 80 to 98 parts by weight based on 100 parts by weight of the second mixture layer, and specifically, may be 84 to 96 parts by weight or 88 to 96 parts by weight.

In this case, the conductive material included in the second mixture layer may be used to improve the performance of the positive electrode, such as conductivity, and one or more selected from the group consisting of natural graphite, artificial graphite, carbon black, acetylene black, Ketjen black, and carbon fiber may be used as the conductive material. For example, the conductive material may include acetylene black.

In addition, the conductive material may be included in an amount of 1 to 10 parts by weight based on 100 parts by weight of the second mixture layer, and specifically, in an amount of 2 to 8 parts by weight or 2 to 6 parts by weight.

In addition, the binder included in the second mixture layer may include one or more resins selected from the group consisting of PVDF-co-HFP, polyvinylidene fluoride, polyacrylonitrile, polymethylmethacrylate, and a copolymer thereof. As an example, the binder may include polyvinylidene fluoride.

In addition, the binder may be included in an amount of 1 to 10 parts by weight based on 100 parts by weight of the second mixture layer, and specifically, in an amount of 2 to 8 parts by weight or 2 to 6 parts by weight.

In addition, an average thickness of the second mixture layer may range from 50 $\mu m$ to 300 $\mu m$, and specifically, from 100 $\mu m$ to 200 $\mu m$, from 80 $\mu m$ to 150 $\mu m$, from 120 $\mu m$ to 170 $\mu m$, from 150 $\mu m$ to 300 $\mu m$, from 200 $\mu m$ to 300 $\mu m$, or from 150 $\mu m$ to 190 $\mu m$.

In a specific example, a thickness of the second mixture layer may be greater than a thickness of the first mixture layer.

In addition, a ratio (D1:D2) of an average thickness (D1) of the first mixture layer to an average thickness (D2) of the second mixture layer may range from 4:6 to 1:10. Specifically, the average thickness ratio (D1:D2) between the first and second positive electrode mixture layers may range from 3:7 to 1:10 or from 2:8 to 1:9. In the present technology, the thickness of the second negative electrode mixture layer is formed to be relatively thick so that a bonding force with the current collector is increased and stability of the electrode is increased.

Meanwhile, in the positive electrode for a lithium secondary battery according to the present technology, a material having high conductivity without causing a chemical change in the battery may be used as the current collector. For example, stainless steel, aluminum, Ni, titanium, and calcined carbon may be used, and aluminum or stainless steel, one whose surface is treated with carbon, Ni, titanium, and silver may be used as the current collector. In addition, fine irregularities may be formed on a surface of the current collector to enhance a bonding force of the positive electrode active material, and a positive electrode current collector in various forms such as a film, a sheet, a foil, a net, a porous body, a foam, and a nonwoven fabric may be used. In addition, an average thickness of the current collector may be appropriately applied in the range of 3 $\mu m$ to 500 $\mu m$ in consideration of the conductivity and total thickness of the positive electrode to be manufactured.

## Method of manufacturing positive electrode for lithium secondary battery

A method of manufacturing a positive electrode for a lithium secondary battery according to one embodiment of the present technology includes a first mixture layer forming operation of forming a first mixture layer by applying a first slurry including a positive electrode active material represented by Chemical Formula 2 below and the positive electrode additive represented by Chemical Formula 1 below on one side or both sides of a current collector, a first rolling operation of rolling the formed first mixture layer, a second mixture layer forming operation of forming a second mixture layer by applying a second slurry including a positive electrode active material represented by Chemical Formula 2 below on the

rolled first mixture layer, and a second rolling operation of rolling the formed second mixture layer, wherein the first rolling operation is performed at a speed ranging from 0.5 m/s to 6 m/s and a temperature ranging from 10°C to 40°C, the second rolling operation is performed at a speed ranging from 2 m/s to 7 m/s and a temperature ranging from 40°C to 100°C, and the second rolling operation is performed at a faster speed than the first rolling operation, wherein the porosity of the first mixture layer ranges from 15% to 40%, and the porosity of the second mixture layer ranges from 40 to 70%, wherein porosity is determined using a mercury porosimeter.

[Chemical Formula 1] $Li_pCo_{(1-q)}M^1_qO_4$

In Chemical Formula 1, $M^1$ denotes at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are $5 \leq p \leq 7$ and $0 \leq q \leq 0.5$, respectively.

[Chemical Formula 2] $Li_x[Ni_yCo_zMn_wM^2_v]O_u$,

in Chemical Formula 2, $M^2$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are $1.0 \leq x \leq 1.30$, $0.1 \leq y < 0.95$, $0.01 < z \leq 0.5$, $0.01 < w \leq 0.5$, $0 \leq v \leq 0.2$, and $1.5 \leq u \leq 4.5$, respectively.

The method of manufacturing a positive electrode for a lithium secondary battery according to the present technology may improve excellent charging/discharging characteristics and lifetime characteristics of the lithium secondary battery by adding the positive electrode additive to the first mixture layer in contact with the current collector. In addition, by sequentially forming the second mixture layer on the first mixture layer so that the second mixture layer is located at the outermost portion, but controlling the conditions of the first and second rolling processes, there is an advantage being capable of improving structures and electrical properties of the first and second mixture layers.

Further, in the method of manufacturing a positive electrode for a lithium secondary battery according to the present technology, the rolling of the first mixture layer is performed using a roll press before the formation of the second mixture layer and the rolling process is performed twice for performing secondary rolling after the formation of the second mixture layer so that thickness uniformity of the first mixture layer can also be improved.

As an example, when a cross section of the positive electrode for a lithium secondary battery manufactured by the method of manufacturing a positive electrode for a lithium secondary battery is analyzed with a scanning electron microscope (SEM) in a thickness direction of the positive electrode, a condition of the following Equation 1 can be satisfied.

[Equation 1]

$$D^2_{min}/D^1_{max} \times 100 \geq 70\%$$

In Equation 1, $D^1_{max}$ denotes a maximum thickness of the first mixture layer after the first rolling operation, and $D^2_{min}$ denotes a minimum thickness of the first mixture layer after the second rolling operation.

Equation 1 represents a rate of change in thickness according to the two rolling processes of the first mixture layer and means that, when the first rolling operation and the second rolling operation are performed and the cross section of the positive electrode is analyzed, as a ratio of the minimum thickness $D^2_{min}$ of the first mixture layer after the second rolling operation to the maximum thickness $D^1_{max}$ of the first mixture layer after the first rolling operation is higher, a thickness deviation of the first mixture layer is lower. Specifically, since the uniformity of the first mixture layer is remarkably high and thus a deviation between the minimum thickness $D^2_{min}$ and the maximum thickness $D^1_{max}$ is small, the condition of Equation 1 can be satisfied at 75% or more (e.g., $D^2_{min}/D^1_{max} \times 100 \geq 75\%$), at 80% or more (e.g., $D^2_{min}/D^1_{max} \times 100 \geq 80\%$), at 85% or more (e.g., $D^2_{min}/D^1_{max} \times 100 \geq 85\%$), at 90% or more (e.g., $D^2_{min}/D^1_{max} \times 100 \geq 90\%$), or ranging from 80 to 95% (e.g., $80\% \leq D^2_{min}/D^1_{max} \times 100 \leq 95\%$).

First, in the present technology, the first mixture layer forming operation is performed at a temperature ranging from of 10 °C to 40 °C. Specifically, the first mixture layer forming operation means that, when a first slurry is applied to the current collector, a temperature of the first slurry or a temperature of a reactor in which the first slurry is stored is controlled to a temperature ranging from 10 °C to 40 °C. More specifically, in the first mixture layer forming operation, the temperature of the reactor in which the first slurry is stored may be controlled to a temperature ranging from 10 °C to 30 °C, from 10 °C to 20 °C, from 15 °C to 25 °C, from 22 °C to 28 °C, from 20 °C to 30 °C, or from 18 °C to 25 °C. When the temperature of the slurry is controlled to be less than a temperature of 10 °C in the first mixture layer forming operation, the slurry may not be uniformly applied on the current collector, and when the temperature is controlled to exceed a temperature of 40 °C, degradation of the positive electrode additive contained in the first slurry may occur. Accordingly, in the first mixture layer forming operation, the temperature of the first slurry may be controlled in the above-described range.

In addition, in the first rolling operation, the thickness of the first mixture layer is uniformly maintained and a rolling

density is increased so that, when the second mixture layer is rolled, it is possible to reduce an influence of the positive electrode active material on the uniformity of the interface. In addition, a rolling temperature is controlled in the first rolling operation, and thus it is possible to minimize the degradation of the positive electrode additive included in the first mixture layer. To this end, the first rolling operation may be performed at a high speed at a low temperature. Specifically, similar to the controlling of the temperature of the slurry when the above-described mixture layer is formed, the first rolling operation is performed at a temperature ranging from 10 °C to 40 °C, and may be performed at a temperature from 10 °C to 30 °C, from 10 °C to 20 °C, from 15 °C to 25 °C, from 22 °C to 28 °C, from 20 °C to 30 °C, or from 18 °C to 25 °C. In addition, the first rolling operation is performed at a rolling speed ranging from 0.5 m/s to 6 m/s, and specifically, may be performed at a rolling speed ranging from 0.5 m/s to 5.5 m/s, from 0.5 m/s to 5 m/s, from 0.5 m/s to 4.5 m/s, from 0.5 m/s to 4 m/s, from 0.5 m/s to 3.5 m/s, from 0.7 m/s to 3 m/s, from 0.7 m/s to 2.5 m/s, from 0.7 m/s to 2 m/s, from 0.9 m/s to 2 m/s, from 1 m/s to 1.5 m/s, from 1 m/s to 1.2 m/s, from 2 m/s to 5 m/s, from 2 m/s to 5.5 m/s, or from 3 m/s to 5 m/s.

Next, like the first mixture layer forming operation, the second mixture layer forming operation may be performed at a temperature ranging from 10 °C to 40 °C. As described above for the first mixture layer forming operation, the second mixture layer forming operation means that, when a second slurry is applied to the current collector, a temperature of the second slurry or a temperature of a reactor in which the second slurry is stored is controlled to a temperature ranging from 10 °C to 40 °C. Since the positive electrode additive is not contained in the second slurry, the second mixture layer forming operation may be performed at a temperature that is higher than the temperature at which the first mixture layer is formed. However, when the temperature of the second slurry is high, since the positive electrode additive included in the first mixture layer may be directly affected, the temperature of the reactor in which the second slurry is stored may be controlled to a temperature ranging from 10 °C to 40 °C.

In addition, when compared to the first rolling operation, the second rolling operation may be performed at a relatively high temperature and high speed as defined in the appended claims. Specifically, the second rolling operation may be performed at a temperature ranging from 50 °C to 100 °C, and more specifically, from 60 °C to 100 °C, from 75 °C to 100 °C, from 85 °C to 100 °C, from 50 °C to 90 °C, from 60 °C to 80 °C, or from 65 °C to 90 °C. Specifically, the second rolling operation is performed at a rolling speed ranging from 2 m/s to 7 m/s, and more specifically, may be performed at a rolling speed ranging from 2 m/s to 6.5 m/s, from 2 m/s to 6 m/s, from 2 m/s to 5.5 m/s, from 2 m/s to 5 m/s, from 2 m/s to 4.5 m/s, from 2 m/s to 4 m/s, from 2.5 m/s to 4 m/s, from 2.5 m/s to 3.5 m/s, from 3.5 m/s to 5 m/s, from 5 m/s to 7 m/s, from 5.5 m/s to 6.5 m/s, or from 6 m/s to 7 m/s.

In addition, the first rolling operation and the second rolling operation may each be performed under a pressure condition ranging from 50 MPa to 200 MPa, and specifically, from 50 MPa to 150 MPa, from 50 MPa to 100 MPa, from 100 MPa to 200 MPa, from 150 MPa to 200 MPa, or from 80 MPa to 140 MPa. In this case, in order to optimize a rolling density of the first mixture layer, the first rolling operation may be performed under the same pressure condition as the second rolling operation or may be performed under a pressure condition that is two times or less a pressure condition of the second rolling operation, for example, that is 1.5 times or less, 1.2 times or less, or 1.1 to 1.4 times the pressure condition of the second rolling operation. In this way, a ratio (D1:D2) of an average thickness (D1) of the prepared first mixture layer to an average thickness (D2) of the prepared second mixture layer may range from 4:6 to 1:10. Specifically, the average thickness ratio (D1:D2) between the first and second positive electrode mixture layers may range from 3:7 to 1:10 or from 2:8 to 1:9. In the present technology, the thickness of the second positive electrode mixture layer is formed to be relatively thick so that a bonding force with the current collector is increased and stability of the electrode is increased.

According to the present technology, the first mixture layer and the second mixture layer are sequentially formed on the current collector under the above temperature condition and the above rolling conditions so that it is possible to manufacture a positive electrode containing a positive electrode additive with minimized degradation.

## Lithium secondary battery

In one embodiment of the present technology, there is provided a lithium secondary battery including the above-described positive electrode according to the present technology, a negative electrode, and a separator interposed between the positive electrode and the negative electrode.

The lithium secondary battery according to the present technology may include the above-described positive electrode of the present technology, thereby reducing an amount of oxygen gas generated during charging and discharging as well as exhibiting excellent charging and discharging performance.

The lithium secondary battery of the present technology has a structure including the positive electrode, the negative electrode, and the separator interposed between the positive electrode and the negative electrode.

Here, the negative electrode is manufactured by applying, drying, and pressing the negative electrode active material on a negative electrode current collector and may further selectively include a conductive material as in the positive electrode, an organic binder polymer, an additive, as necessary.

In addition, the negative active material may include, for example, a carbon material and a silicon material. The carbon material means a carbon material containing carbon atoms as a main component. The carbon material may include

one or more selected from the group consisting of graphite with a completely layered crystal structure as natural graphite, soft carbon with a low crystallinity layered crystal structure (a graphene structure is a structure in which hexagonal honeycomb planes of carbon are disposed in layers), hard carbon in which these structures are mixed with amorphous portions, artificial graphite, expanded graphite, carbon fiber, non-graphitized carbon, carbon black, acetylene black, Ketjen black, carbon nanotubes, fullerenes, activated carbon, graphene, and carbon nanotubes. More preferably, the carbon material may include natural graphite and/or artificial graphite and may include any one or more of graphene and carbon nanotubes together with the natural graphite and/or the artificial graphite. In this case, the carbon material may include graphene and/or carbon nanotubes at 0.1 to 10 parts by weight based on 100 parts by weight of the total carbon material, and more specifically, the carbon material may include graphene and/or carbon nanotubes at 0.1 to 5 parts by weight or 0.1 to 2 parts by weight based on 100 parts by weight of the total carbon material.

In addition, the silicon material is a particle including, as a main component, silicon (Si) as a metal component and may include one or more of Si particles and silicon oxide ($SiO_X$ and $1 \leq X \leq 2$) particles. As an example, the silicon material may include Si particles, silicon monoxide (SiO) particles, silicon dioxide ($SiO_2$) particles, or a mixture thereof.

In addition, the silicon material may have a mixed form of crystalline particles and amorphous particles, and a proportion of the amorphous particles is 50 to 100 parts by weight, specifically, 50 to 90 parts by weight, 60 to 80 parts by weight, or 85 to 100 parts by weight based on 100 parts by weight of the total silicon material. In the present technology, the proportion of the amorphous particles contained in the silicon material is controlled to the above range so that thermal stability and flexibility can be improved in a range that does not degrade electrical properties of the electrode.

In addition, the negative active material includes a carbon material and a silicon material and may be included of 1 to 20 parts by weight, and specifically, 5 to 20 parts by weight, 3 to 10 parts by weight, 8 to 15 parts by weight, 13 to 18 parts by weight, or 2 to 7 parts by weight based on 100 parts by weight of the negative electrode mixture layer.

In the present technology, the content of the carbon material and the silicon material included in the negative electrode active material is adjusted to the above ranges so that it is possible to improve a charging capacity per unit mass while reducing Li consumption and irreversible capacity loss during the initial charging and discharging of the battery.

As an example, the negative active material may include $95\pm2$ parts by weight of graphite and $5\pm2$ parts by weight of a mixture in which SiO particles and $SiO_2$ particles are uniformly mixed based on 100 parts by weight of the negative electrode mixture layer. In the present technology, the content of the carbon material and the silicon material included in the negative electrode active material is adjusted to the above ranges so that it is possible to improve a charging capacity per unit mass while reducing Li consumption and irreversible capacity loss during the initial charging and discharging of the battery.

In addition, the negative electrode mixture layer may have an average thickness ranging from 100 μm to 200, and specifically, from 100 μm to 180 μm, from 100 μm to 150 μm, from 120 μm to 200 μm, from 140 μm to 200 μm, or from 140 μm to 160 μm.

In addition, the negative electrode current collector is not particularly limited as long as it has high conductivity without causing a chemical change in the battery, and for example, copper, stainless steel, Ni, titanium, and calcined carbon may be used as the negative electrode current collector, and copper or stainless steel having a surface treated with carbon, nickel, titanium, or silver may be used. In addition, like the positive electrode current collector, fine irregularities may be formed on a surface of the negative electrode current collector to enhance a bonding force with the negative electrode active material, and a negative electrode current collector in various forms such as a film, a sheet, a foil, a net, a porous body, a foam, and a nonwoven fabric may be used. In addition, an average thickness of the negative electrode current collector may be appropriately applied in the range of 3 μm to 500 μm in consideration of the conductivity and total thickness of the negative electrode to be manufactured.

In addition, the separator is interposed between the positive electrode and the negative electrode, and an insulating thin film having high ion permeability and high mechanical strength is used as the separator. The separator is not particularly limited as long as it is generally used in the art, and specifically, chemical-resistant and hydrophobic polypropylene, a glass fiber, or a sheet or a nonwoven fabric made of polyethylene may be used as the separator. In some cases, a composite separator in which a porous polymer base material such as a sheet or nonwoven fabric is coated with inorganic particles/organic particles by an organic binder polymer may be used for the separator. When a solid electrolyte such as a polymer is used as the electrolyte, the solid electrolyte may also serve as the separator. In addition, the separator may have an average pore diameter ranging from 0.01 μm to 10 μm, and an average thickness ranging from 5 μm to 300 μm.

Meanwhile, the positive electrode and the negative electrode may be wound in the form of a jelly roll and accommodated in a cylindrical battery, a prismatic battery, or a pouch-type battery or may be accommodated in a pouch-type battery in a folding or stack-and-folding form, but the present technology is not limited thereto.

In addition, an electrolyte containing a lithium salt according to the present technology may consist of an electrolyte and a lithium salt, and a non-aqueous organic solvent, an organic solid electrolyte, or an inorganic solid electrolyte may be used as the electrolyte.

For example, as the non-aqueous organic solvent, an aprotic organic solvent such as N-methyl-2-pyrrolidinone,

ethylene carbonate, propylene carbonate, butylene carbonate, dimethyl carbonate, diethyl carbonate, gamma-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxymethane, a dioxolane derivative, sulfolane, methyl sulfolane, 1,3-dimethyl-2-imidazolidinone, a propylene carbonate derivative, a tetrahydrofuran derivative, ether, methyl propionate, or ethyl propionate may be used.

For example, as the organic solid electrolyte, a polyethylene derivative, a polyethylene oxide derivative, a polypropylene oxide derivative, a phosphate ester polymer, poly agitation lysine, polyester sulfide, polyvinyl alcohol (PVA), polyvinylidene fluoride, or a polymer containing an ionic dissociation group may be used.

Nitrides, halides, sulfates of lithium such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, $Li_3PO_4$-$Li_2S$-$SiS_2$, etc. may be used as the inorganic solid electrolyte.

The lithium salt is a material that is easily soluble in a non-aqueous electrolyte. For example, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, chloroborane lithium, lithium lower aliphatic carboxylates, lithium 4-phenylboronate, or imide may be used as the lithium salt.

In addition, for the purpose of improving charging/discharging characteristics and flame retardancy, for example, pyridine, triethylphosphite, triethanolamine, cyclic ether, ethylene diamine, n-glyme, hexaphosphoric acid triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxyethanol, or aluminum trichloride may be added to the electrolyte. In some cases, in order to impart incombustibility, a halogen-containing solvent such as carbon tetrachloride or ethylene trifluoride may be further included, and in order to improve high-temperature storage characteristics, a carbon dioxide gas may be further included, and fluoro-ethylene carbonate (FEC) or propene sultone (PRS) may be further included.

Meanwhile, according to one embodiment of the present technology, a battery module including the above-described secondary battery as a unit cell is provided, and a battery pack including the battery module is provided.

The battery pack may be used as a power source for medium-large devices requiring high-temperature stability, long cycle characteristics, and high rate characteristics. Specific examples of the medium-large devices include power tools driven by an electric motor, electric vehicles (EVs) including EVs, hybrid EVs (HEVs), and plug-in HEVs (PHEVs), electric two-wheeled vehicles including electric bicycles (E-bikes) and electric scooters (E-scooters), electric golf carts, electric trucks, and systems for power storage, and more specifically, HEVs, but the present technology is not limited thereto.

[Detailed Description of the Preferred Embodiments]

Hereinafter, the present invention will be described in more detail with reference to examples and experimental examples.

However, the following examples and experimental examples are merely illustrative of the present invention, and the content of the present invention is not limited to the following examples and experimental examples.

**Examples 1 to 4 and Comparative Examples 1 to 7. Manufacture of positive electrode for lithium secondary battery**

95 parts by weight of $LiNi_{0.8}Co_{0.1}Mn_{0.1}O_2$ as a positive electrode active material, 0.9 parts by weight of $Li_6CoO_4$ as a positive electrode additive, 1.6 parts by weight of PVdF as a binder, and 2.5 parts by weight of carbon black as a conductive material were weighed and mixed with an N-methylpyrrolidone (NMP) solvent to prepare a first slurry for a first mixture layer.

Separately, 95 parts by weight of $LiNi_{0.8}Co_{0.1}Mn_{0.1}O_2$ as a positive electrode active material, 2 parts by weight of PVdF as a binder, and 3 parts by weight of carbon black as a conductive material were weighed and mixed with an NMP solvent to prepare a second slurry for a second mixture layer.

The first slurry was applied on aluminum foil and dried, and then the first rolling operation was performed to form a first mixture layer (an average thickness: 8 $\mu$m). Subsequently, the second slurry was applied on the first mixture layer and dried, and then the second rolling operation was performed to form a second mixture layer (an average thickness: 100 $\mu$m). In this case, by analyzing a cross section of the first mixture layer immediately after the first rolling operation and the second rolling operation were respectively performed, a maximum thickness $D^1_{max}$ of the first mixture layer after the first rolling operation and a minimum thickness $D^2_{min}$ of the first mixture layer after the second rolling operation were measured, and a ratio of the measured result values ($D^2_{min}/D^1_{max}$) and the conditions for performing the first rolling operation and the second rolling operation are shown in Table 1 below. In addition, the conditions for performing the first and second mixture layer forming operations and the first and second rolling operations are shown in Table 1 below.

[Table 1]

| | First mixture layer forming operation | First rolling operation | | | Second mixture layer forming operation | Second rolling operation | | | $D^2_{min}/D^1_{max}$ |
|---|---|---|---|---|---|---|---|---|---|
| | Temperature of first slurry [°C] | Temp eratur e [°C] | Pressure [MPa] | Speed [m/s] | Temperature of second slurry [°C] | Tempe rature [°C] | Pressure [MPa] | Speed [m/s] | |
| Example 1 | 30± 1 | 25± 1 | 100 | 1 | 30± 1 | 70± 1 | 100 | 3 | 0.94 |
| Example 2 | 30± 1 | 25± 1 | 100 | 1 | 30± 1 | 50± 1 | 100 | 3 | 0.85 |
| Example 3 | 30± 1 | 25± 1 | 100 | 1 | 30± 1 | 70± 1 | 100 | 3 | 0.93 |
| Example 4 | 30± 1 | 25± 1 | 100 | 4 | 30± 1 | 70± 1 | 100 | 4 | 0.92 |
| Comparative Example 1 | 30± 1 | 25± 1 | 100 | 1 | 60± 1 | 25± 1 | 100 | 3 | 0.88 |
| Comparative Example 2 | 60± 1 | 25± 1 | 100 | 1 | 60± 1 | 25± 1 | 100 | 1 | 0.62 |
| Comparative Example 3 | 30± 1 | 25± 1 | 50 | 1 | 60± 1 | 70± 1 | 100 | 3 | 0.63 |
| Comparative Example 4 | 30± 1 | 60± 1 | 100 | 1 | 30± 1 | 70± 1 | 100 | 3 | 0.90 |
| Comparative Example 5 | 30± 1 | 25± 1 | 200 | 1 | 30± 1 | 70± 1 | 100 | 3 | 0.88 |
| Comparative Example 6 | 30± 1 | 25± 1 | 100 | 0.3 | 30± 1 | 70± 1 | 100 | 3 | 0.81 |
| Comparative Example 7 | 30± 1 | 25± 1 | 100 | 7 | 30± 1 | 70± 1 | 100 | 3 | 0.56 |

**Experimental Example 1**

1) Observation of XRD pattern for first mixture layer

In order to confirm a change of the positive electrode additive according to a temperature when the positive electrode for a lithium secondary battery is manufactured, X-ray diffraction was measured for the first mixture layer of the positive electrode for a lithium secondary battery manufactured in Examples 1 to 4 and Comparative Examples 1 to 4, and a fraction included in each positive electrode additive was calculated from the measured X-ray diffraction. In this case, the X-ray diffraction was measured using an X-ray diffraction analyzer of Rigaku Corporation, and a wavelength of 1.5406 Å (Cu Ka radiation, 40 kV, and 100 mA) was scanned, and an X-ray diffraction pattern was obtained in the range of 15° to 64° at an angle of $2\theta$ and at a scanning speed of 5 °/sec.

As a result, peaks appearing in $Li_6CoO_4$ of the first mixture layers of Examples 1 to 4 were observed. Specifically, a peak A was observed in the range of $2\theta=38.5\pm0.1°$, and a peak B was observed in the range of $2\theta=47.9\pm0.1°$. For reference, A/B of Examples 1 to 4 was less than or equal to 0.1.

On the other hand, in Comparative Examples 1 to 4, the peaks shown in Examples 1 to 4 were not observed. It is considered that a structure of the positive electrode additive was deformed due to high temperatures in the mixture layer forming operation and the rolling operation when the positive electrode was manufactured.

**Experimental Example 2**

In order to evaluate the performance of the positive electrode for a lithium secondary battery and the lithium secondary battery according to the present technology, the following experiment was performed.

1) Evaluation of porosity of positive electrode

Electrode porosity for the first and second mixture layers of the positive electrode manufactured in Examples and Comparative Examples was measured. In addition, the results are shown in Table 2 below.

2) Evaluation of initial resistance value

A lithium secondary battery was manufactured using each positive electrode manufactured in Examples and Comparative Examples. Specifically, natural graphite as a negative electrode active material, a carbon black conductive material, and a PVdF binder were mixed with an NMP solvent in a weight ratio of 85:10:5 to prepare a slurry for forming the negative electrode, and the slurry was applied to copper foil to manufacture a negative electrode. A separator (a thickness: about 16 $\mu$m) made of a porous polyethylene (PE) film was laminated and interposed between each positive electrode manufactured in Examples and Comparative Examples and the manufactured negative electrode to manufacture an electrode assembly. The manufactured electrode assembly was placed inside a battery case, and then an electrolyte was injected into the case to manufacture a lithium secondary battery. In this case, the electrolyte was prepared by dissolving Li hexafluorophosphate ($LiPF_6$) at a concentration of 1.0 M in an organic solvent consisting of ethylene carbonate/dimethyl carbonate/ethyl methyl carbonate (a mixing volume ratio of EC/DMC/EMC is 3/4/3).

In addition, each of the manufactured lithium secondary batteries was charged with a constant current (CC) at a rate of 0.3 C using a CC-CV (constant voltage) method so that a voltage of the lithium secondary battery become 4.2 V at a current of 333 mA, and after the voltage of the battery reached 4.2V, the lithium secondary battery was charged once by cutting off a current at a rate of 0.05 C while maintaining a CV of 4.2V. One cycle of performing CC discharging was repeated three times for the one time-charged battery at a CC of 333 mA and at a rate of 0.3 C until the voltage of the battery reached 3 V. After recording a voltage drop that occurred when discharging was performed with a current of 2 A (2C) for ten seconds, a direct-current (DC) discharging resistance value, which was measured at the time of initial evaluation and calculated using R=V/1 (Ohm’s law) is shown in Table 2 below. In this case, DC resistance has a close relationship with output characteristics of the secondary battery.

3) Evaluation of cycle life performance

In the same manner as in the evaluation of the initial resistance value, a lithium secondary battery was manufactured using each of the positive electrodes manufactured in Examples and Comparative Examples. For each manufactured lithium secondary battery, a capacity retention rate was measured while performing 100 times of charging/discharging (n=100) and 200 times of charging/discharging (n=200) at a temperature of 25 °C under conditions of a final charging voltage of 4.25 V, a final discharging voltage of 2.5V, and 0.5 C/0.5 C. In this case, the capacity retention rate was calculated using Equation 2 below, and the results are shown in Table 2 below.

Capacity retention rate (%) = (discharging capacity at n times of charging and discharging/discharging capacity at one time of charging and discharging) X 100 [Equation 2]

[Table 2]

| | Porosity (%) | | Resistance (mΩ) | Capacity retention rate (%) during charging/discharging | |
|---|---|---|---|---|---|
| | First mixture layer | Second mixture layer | | 100 times (n=100) | 200 times (n=200) |
| Example 1 | 30 | 49 | 64.8 | 98.1 | 94.9 |
| Example 2 | 25 | 50 | 63 | 98.5 | 95.6 |
| Example 3 | 28 | 55 | 63.9 | 96.9 | 94.7 |
| Example 4 | 28 | 50 | 61.2 | 98.7 | 95.7 |
| Comparative Example 1 | 30 | 45 | 82.8 | 96.6 | 91.7 |
| Comparative Example 2 | 25 | 45 | 79.2 | 92 | 81.1 |
| Comparative Example 3 | 50 | 60 | 82.8 | 90.8 | 84.4 |
| Comparative Example 4 | 25 | 40 | 84.6 | 95.6 | 88.9 |
| Comparative Example 5 | 9 | 60 | 86.4 | 94.4 | 90.2 |
| Comparative Example 6 | 42 | 61 | 74.7 | 94.4 | 90.1 |
| Comparative Example 7 | 45 | 50 | 72 | 92 | 88.1 |

As shown in Table 2, in the case of the lithium secondary batteries manufactured in Examples, it was confirmed that the resistance values were lower than those of Comparative Examples. In particular, the lithium secondary batteries including the positive electrodes of Comparative Examples 1 to 4 had highest resistance values. This is considered to be due to structural deformation of the positive electrode additive due to high temperatures in the mixture layer forming operation and the rolling operation when the positive electrodes of Comparative Examples were manufactured. In addition, it was found that a battery having a positive electrode of Examples had improved electrical performance and had a high capacity retention rate of 97% or more and 95% or more, respectively, when 100 times and 200 times of charging and discharging were performed.

On the other hand, in the case of Comparative Example 5, it was confirmed that the porosity of the first mixture layer was too small and thus it was difficult for the electrolyte to penetrate to the surface of the current collector so that the electrical performance of the battery was degraded. In addition, it was confirmed that, in each of the batteries having the positive electrodes of Comparative Examples 6 and 7, the porosity of the first mixture layer was significantly reduced so that the electrical performance of the batteries were degraded.

From the above results, the method of manufacturing a positive electrode for a lithium secondary battery according to the present technology can have excellent charging/discharging characteristics and improve lifetime characteristics of the lithium secondary battery by adding the positive electrode additive to the first mixture layer in contact with the current collector. In addition, by sequentially forming the second mixture layer on the first mixture layer so that the second mixture layer is located at the outermost portion and controlling conditions of the first and second rolling processes, it is possible to minimize the degradation of the positive electrode additive included in the first mixture layer, and thus it is possible to realize high battery performance.

## Claims

**1.** A positive electrode for a lithium secondary battery, comprising:

a current collector; and
a mixture layer formed on one surface or both surfaces of the current collector,
wherein the mixture layer is a double-layer structure in which a first mixture layer and a second mixture layer are stacked, wherein the second mixture layer is formed on the first mixture layer formed on the current collector,

the first mixture layer includes a positive electrode active material represented by Chemical Formula 2 below, a positive electrode additive represented by Chemical Formula 1 below, a conductive material, and a binder,
the second mixture layer includes a positive electrode active material represented by Chemical Formula 2 below, and
a porosity of the first mixture layer ranges from 15% to 40%, and a porosity of the second mixture layer ranges from 40% to 70%, wherein porosity is determined using a mercury porosimeter:

[Chemical Formula 1] $Li_pCO_{(1-q)}M^1_qO_4$,

in Chemical Formula 1, $M^1$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are $5 \leq p \leq 7$ and $0 \leq q \leq 0.5$, respectively;

[Chemical Formula 2] $Li_x[Ni_yCo_zMn_wM^2_v]O_u$,

in Chemical Formula 2, $M^2$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are $1.0 \leq x \leq 1.30$, $0.1 \leq y < 0.95$, $0.01 < z \leq 0.5$, $0.01 < w \leq 0.5$, $0 \leq v \leq 0.2$, and $1.5 \leq u \leq 4.5$, respectively.

**2.** The positive electrode of claim 1, wherein:

an average thickness of the first mixture layer ranges from 0.1 μm to 20 μm; and
an average thickness of the second mixture layer ranges from 50 μm to 300 μm.

**3.** The positive electrode of claim 1, wherein a ratio of D1:D2 of an average thickness D1 of the first mixture layer to an average thickness D2 of the second mixture layer ranges from 4:6 to 1:10.

**4.** The positive electrode of claim 1, wherein a content of the positive electrode additive ranges from 0.1 to 5 wt% based on a total weight of the first mixture layer.

**5.** A method of manufacturing a positive electrode for a lithium secondary battery, the method comprising:

a first mixture layer forming operation of forming a first mixture layer by applying a first slurry including a positive electrode active material represented by Chemical Formula 2 below and the positive electrode additive represented by Chemical Formula 1 below on one side or both sides of a current collector;
a first rolling operation of rolling the formed first mixture layer;
a second mixture layer forming operation of forming a second mixture layer by applying a second slurry including a positive electrode active material represented by Chemical Formula 2 below on the rolled first mixture layer; and
a second rolling operation of rolling the formed second mixture layer,
wherein the first rolling operation is performed at a speed ranging from 0.5 m/s to 6 m/s and a temperature ranging from 10°C to 40°C,
the second rolling operation is performed at a speed ranging from 2 m/s to 7 m/s and a temperature ranging from 40°C to 100°C, and
the second rolling operation is performed at a faster speed than the first rolling operation;
wherein a porosity of the first mixture layer ranges from 15 to 40%, and a porosity of the second mixture layer ranges from 40 to 70%, wherein porosity is determined using a mercury porosimeter:

[Chemical Formula 1] $Li_pCo_{(1-q)}M^1_qO_4$,

in Chemical Formula 1, $M^1$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are $5 \leq p \leq 7$ and $0 \leq q \leq 0.5$, respectively;

[Chemical Formula 2] $Li_x[Ni_yCo_zMn_wM^2_v]O_u$,

in Chemical Formula 2, $M^2$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are $1.0 \leq x \leq 1.30$, $0.1 \leq y < 0.95$, $0.01 < z \leq 0.5$, $0.01 < w \leq 0.5$, $0 \leq v \leq 0.2$, and $1.5 \leq u \leq 4.5$, respectively.

**6.** The method of claim 5, wherein the first mixture layer satisfies a thickness change rate condition of Equation 1 below:

[Equation 1]

$$D^2_{min}/D^1_{max} \times 100 \geq 70\%,$$

in Equation 1, $D^1_{max}$ denotes a maximum thickness of the first mixture layer after the first rolling operation, and $D^2_{min}$ denotes a minimum thickness of the first mixture layer after the second rolling operation.

**7.** A lithium secondary battery comprising:

the positive electrode according to any one of claims 1 to 4;
a negative electrode; and
a separator interposed between the positive electrode and the negative electrode.

**8.** The lithium secondary battery of claim 7, wherein:

the negative electrode includes a negative electrode current collector, and a negative electrode mixture layer which is located on the negative electrode current collector and contains a negative electrode active material; and
the negative electrode active material includes a carbon material and a silicon material.

**Patentansprüche**

**1.** Positive Elektrode für eine Lithium-Sekundärbatterie, umfassend:

einen Stromabnehmer; und
eine Mischungsschicht, die auf einer Oberfläche oder beiden Oberflächen des Stromabnehmers gebildet ist, worin die Mischungsschicht eine Doppelschichtstruktur aufweist, worin eine erste Mischungsschicht und eine zweite Mischungsschicht gestapelt sind, worin die zweite Mischungsschicht auf der ersten Mischungsschicht gebildet ist, die auf dem Stromabnehmer gebildet ist,
worin die erste Mischungsschicht ein Positivelektroden-Aktivmaterial, dargestellt durch die nachstehende chemische Formel 2, ein Positivelektroden-Additiv, dargestellt durch die nachstehende chemische Formel 1, ein leitfähiges Material und ein Bindemittel umfasst,
die zweite Mischungsschicht ein Positivelektroden-Aktivmaterial, dargestellt durch die nachstehende chemische Formel 2, umfasst,
und
die Porosität der ersten Mischungsschicht im Bereich von 15 % bis 40 % liegt und die Porosität der zweiten Mischungsschicht im Bereich von 40 % bis 70 % liegt, worin die Porosität mit einem Quecksilber-Porosimeter bestimmt wird:

[Chemische Formel 1] $Li_pCo_{(1-q)}M^1_qO_4$

worin in der chemischen Formel 1 $M^1$ eines oder mehrere Elemente bezeichnet, ausgewählt aus der Gruppe bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, und p und q $5 \leq p \leq 7$ bzw. $0 \leq q \leq 0,5$ erfüllen;

[Chemische Formel 2] $Li_x[Ni_yCo_zMn_wM^2_v]O_u$

worin in der chemischen Formel 2 $M^2$ eines oder mehrere Elemente bezeichnet, ausgewählt aus der Gruppe bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, und x, y, z, w, v und u $1,0 \leq x \leq 1,30$, $0,1 \leq y < 0,95$, $0,01 < z \leq 0,5$, $0,01 < w \leq 0,5$, $0 \leq v \leq 0,2$ bzw. $1,5 \leq u \leq 4,5$ erfüllen.

**2.** Positive Elektrode gemäß Anspruch 1, worin:

die mittlere Dicke der ersten Mischungsschicht im Bereich von 0,1 μm bis 20 μm liegt; und
die mittlere Dicke der zweiten Mischungsschicht im Bereich von 50 μm bis 300 μm liegt.

**3.** Positive Elektrode gemäß Anspruch 1, worin das Verhältnis D1:D2 der mittleren Dicke D1 der ersten Mischungsschicht zur mittleren Dicke D2 der zweiten Mischungsschicht im Bereich von 4:6 bis 1:10 liegt.

**4.** Positive Elektrode gemäß Anspruch 1, worin der Mengenanteil des Positivelektroden-Additivs im Bereich von 0,1 bis 5 Gew.-% liegt, bezogen auf das Gesamtgewicht der ersten Mischungsschicht.

**5.** Verfahren zur Herstellung einer positiven Elektrode für eine Lithium-Sekundärbatterie, wobei das Verfahren umfasst:

einen ersten Mischungsschicht-Bildungsschritt zum Bilden einer ersten Mischungsschicht durch Auftragen einer ersten Aufschlämmung, umfassend ein durch die nachstehende chemische Formel 2 dargestelltes Positivelektroden-Aktivmaterial und das durch die nachstehende chemische Formel 1 dargestellte Positivelektroden-Additiv auf eine oder beide Seiten eines Stromabnehmers;
eine erste Walzhandlung zum Walzen der gebildeten ersten Mischungsschicht;
einen zweiten Mischungsschicht-Bildungsschritt zum Bilden einer zweiten Mischungsschicht durch Auftragen einer zweiten Aufschlämmung, umfassend ein durch die nachstehende chemische Formel 2 dargestelltes Positivelektroden-Aktivmaterial, auf die gewalzte erste Mischungsschicht; und
eine zweite Walzhandlung zum Walzen der gebildeten zweiten Mischungsschicht,
worin die erste Walzhandlung mit einer Geschwindigkeit im Bereich von 0,5 m/s bis 6 m/s und bei einer Temperatur im Bereich von 10°C bis 40°C durchgeführt wird,
die zweite Walzhandlung mit einer Geschwindigkeit von 2 m/s bis 7 m/s und bei einer Temperatur im Bereich von 40°C bis 100°C durchgeführt wird, und
die zweite Walzhandlung mit einer größeren Geschwindigkeit als die erste Walzhandlung durchgeführt wird,
worin die Porosität der ersten Mischungsschicht im Bereich von 15 bis 40 % liegt und die Porosität der zweiten Mischungsschicht im Bereich von 40 bis 70 % liegt, worin die Porosität mit einem Quecksilber-Porosimeter bestimmt wird:

[Chemische Formel 1] $Li_pCo_{(1-q)}M^1_qO_4$

worin in der chemischen Formel 1 $M^1$ eines oder mehrere Elemente bezeichnet, ausgewählt aus der Gruppe, bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, und p und q $5 \leq p \leq 7$ bzw. $0 \leq q \leq 0,5$ erfüllen;

[Chemische Formel 2] $Li_x[Ni_yCo_zMn_wM^2_v]O_u$

worin in der chemischen Formel 2 $M^2$ eines oder mehrere Elemente bezeichnet, ausgewählt aus der Gruppe, bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, und x, y, z, w, v und u $1,0 \leq x \leq 1,30$, $0,1 \leq y < 0,95$, $0,01 < z \leq 0,5$, $0,01 < w \leq 0,5$, $0 \leq v \leq 0,2$ bzw. $1,5 \leq u \leq 4,5$ erfüllen.

**6.** Verfahren gemäß Anspruch 5, worin die erste Mischungsschicht eine Dickenveränderungsratenbedingung der nachstehenden Gleichung 1 erfüllt:

[Gleichung 1]

$$D^2_{min}/D^1_{max} \times 100 \geq 70\ \%$$

worin in Gleichung 1 $D^1_{max}$ die maximale Dicke der ersten Mischungsschicht nach der ersten Walzhandlung bezeichnet und $D^2_{min}$ die minimale Dicke der ersten Mischungsschicht nach der zweiten Walzhandlung bezeichnet.

**7.** Lithium-Sekundärbatterie, umfassend:

die positive Elektrode gemäß irgendeinem der Ansprüche 1 bis 4;
eine negative Elektrode; und
einen zwischen der positiven Elektrode und der negativen Elektrode vorgesehenen Separator.

**8.** Lithium-Sekundärbatterie gemäß Anspruch 7, worin:

die negative Elektrode einen Negativelektroden-Stromabnehmer und eine Negativelektroden-Mischungsschicht, die sich auf dem Negativelektroden-Stromabnehmer befindet und die ein Negativelektroden-Aktivmaterial enthält, umfasst; und
das Negativelektroden-Aktivmaterial ein Kohlenstoffmaterial und ein Siliziummaterial umfasst.

## Revendications

1. Électrode positive pour une batterie secondaire au lithium, comprenant :

un collecteur de courant ; et
une couche de mélange formée sur une surface ou sur les deux surfaces à la fois du collecteur de courant, dans laquelle la couche de mélange est une structure à double couche dans laquelle une première couche de mélange et une deuxième couche de mélange sont empilées, dans laquelle la deuxième couche de mélange est formée sur la première couche de mélange formée sur le collecteur de courant,
la première couche de mélange inclut un matériau actif d'électrode positive représenté par la Formule chimique 2 ci-dessous, un additif d'électrode positive représenté par la Formule chimique 1 ci-dessous, un matériau conducteur, et un liant,
la deuxième couche de mélange inclut un matériau actif d'électrode positive représenté par la Formule chimique 2 ci-dessous,
et
une porosité de la première couche de mélange va de 15 % à 40 %, et une porosité de la deuxième couche de mélange va de 40 % à 70 %, dans laquelle la porosité est déterminée en utilisant un porosimètre à mercure :

[Formule chimique 1] $Li_pCo_{(1-q)}M^1_qO_4$,

dans la Formule chimique 1, $M^1$ désigne un ou plusieurs éléments sélectionnés parmi le groupe consistant en W, Cu, Fe, V, Cr, Ti, Zr, Zn, Al, In, Ta, Y, La, Sr, Ga, Sc, Gd, Sm, Ca, Ce, Nb, Mg, B, et Mo, et p et q sont $5 \leq p \leq 7$ et $0 \leq q \leq 0,5$, respectivement ;

[Formule chimique 2] $Li_x[Ni_yCo_zMn_wM^2_v]O_u$,

dans la Formule chimique 2, $M^2$ désigne un ou plusieurs éléments sélectionnés parmi le groupe consistant en W, Cu, Fe, V, Cr, Ti, Zr, Zn, Al, In, Ta, Y, La, Sr, Ga, Sc, Gd, Sm, Ca, Ce, Nb, Mg, B, et Mo, et x, y, z, w, v, et u sont $1,0 \leq x \leq 1,30$, $0,1 \leq y < 0,95$, $0,01 < z \leq 0,5$, $0,01 < w \leq 0,5$, $0 \leq v \leq 0,2$, et $1,5 \leq u \leq 4,5$, respectivement.

2. Électrode positive selon la revendication 1, dans laquelle :

une épaisseur moyenne de la première couche de mélange va de 0,1 μm à 20 μm ; et
une épaisseur moyenne de la deuxième couche de mélange va de 50 μm à 300 μm.

3. Électrode positive selon la revendication 1, dans laquelle un rapport de D1:D2 d'une épaisseur moyenne DI de la première couche de mélange sur une épaisseur moyenne D2 de la deuxième couche de mélange va de 4:6 à 1:10.

4. Électrode positive selon la revendication 1, dans laquelle une teneur de l'additif d'électrode positive va de 0,1 à 5 % en poids sur la base d'un poids total de la première couche de mélange.

5. Procédé de fabrication d'une électrode positive pour une batterie secondaire au lithium, le procédé comprenant :

une opération de formation de première couche de mélange consistant à former une première couche de mélange par l'application d'une première suspension incluant un matériau actif d'électrode positive représenté par la Formule chimique 2 ci-dessous et l'additif d'électrode positive représenté par la Formule chimique 1 ci-dessous sur un côté ou sur les deux côtés à la fois d'un collecteur de courant ;
une première opération de laminage consistant à laminer la première couche de mélange formée ;
une deuxième opération de formation de couche de mélange consistant à former une deuxième couche de mélange par l'application d'une deuxième suspension incluant un matériau actif d'électrode positive représenté par la Formule chimique 2 ci-dessous sur la première couche de mélange laminée ; et
une deuxième opération de laminage consistant à laminer la deuxième couche de mélange formée,

dans lequel la première opération de laminage est effectuée à une vitesse allant de 0,5 m/s à 6 m/s et à une température allant de 10 °C à 40 °C,
la deuxième opération de laminage est effectuée à une vitesse allant de 2 m/s à 7 m/s et à une température allant de 40 °C à 100 °C, et
la deuxième opération de laminage est effectuée à une vitesse plus rapide que la première opération de laminage ;
dans lequel une porosité de la première couche de mélange va de 15 à 40 %, et une porosité de la deuxième couche de mélange va de 40 à 70 %, dans lequel la porosité est déterminée en utilisant un porosimètre à mercure :

[Formule chimique 1] $Li_pCo_{(1-q)}M^1{}_qO_4$,

dans la Formule chimique 1, $M^1$ désigne un ou plusieurs éléments sélectionnés parmi le groupe consistant en W, Cu, Fe, V, Cr, Ti, Zr, Zn, Al, In, Ta, Y, La, Sr, Ga, Sc, Gd, Sm, Ca, Ce, Nb, Mg, B, et Mo, et p et q sont $5 \leq p \leq 7$ et $0 \leq q \leq 0,5$, respectivement ;

[Formule chimique 2] $Li_x[Ni_yCo_zMn_wM^2{}_v]O_u$,

dans la Formule chimique 2, $M^2$ désigne un ou plusieurs éléments sélectionnés parmi le groupe consistant en W, Cu, Fe, V, Cr, Ti, Zr, Zn, Al, In, Ta, Y, La, Sr, Ga, Sc, Gd, Sm, Ca, Ce, Nb, Mg, B, et Mo, et x, y, z, w, v, et u sont $1,0 \leq x \leq 1,30$, $0,1 \leq y \leq 0,95$, $0,01 < z \leq 0,5$, $0,01 < w \leq 0,5$, $0 \leq v \leq 0,2$, et $1,5 \leq u \leq 4,5$, respectivement.

**6.** Procédé selon la revendication 5, dans lequel la première couche de mélange satisfait à une condition de taux de variation d'épaisseur de l'Équation 1 ci-dessous :

[Équation 1]

$$D^2_{min}/D^1_{max} \times 100 \geq 70\ \%,$$

dans l'Équation 1, $D^1_{max}$ désigne une épaisseur maximale de la première couche de mélange après la première opération de laminage, et $D^2_{min}$ désigne une épaisseur minimale de la première couche de mélange après la deuxième opération de laminage.

**7.** Batterie secondaire au lithium comprenant :

l'électrode positive selon l'une quelconque des revendications 1 à 4 ;
une électrode négative ; et
un séparateur interposé entre l'électrode positive et l'électrode négative.

**8.** Batterie secondaire au lithium selon la revendication 7, dans laquelle :

l'électrode négative inclut un collecteur de courant d'électrode négative, et une couche de mélange d'électrode négative qui est située sur le collecteur de courant d'électrode négative et contient un matériau actif d'électrode négative ; et
le matériau actif d'électrode négative inclut un matériau de carbone et un matériau de silicium.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013016515 A
- US 20160351905 A1
- EP 3579308 A1
- CN 107706351 A
- EP 4199156 A1
- JP 2019061751 A